# EUROPÄISCHE PATENTSCHRIFT

(11) **EP 2 620 628 B1**
(45) Veröffentlichungstag und Bekanntmachung des Hinweises auf die Patenterteilung: **08.01.2020**
(21) Anmeldenummer: 13000273.6
(22) Anmeldetag: 18.01.2013
(51) Int. Cl.: F02K 1/82, F02C 7/045, B64D 33/02

(54) **Triebwerksgehäuse einer Fluggasturbine mit Schalldämpfungselementen im Fan-Einströmbereich**
Gas turbine engine nacelle with sound damping means in the fan intake area
Nacelle de turbine à gaz avec moyens d'amortissement du bruit dans la zone d'admission de la soufflante

(30) Priorität: 26.01.2012 DE 102012001571
(43) Veröffentlichungstag der Anmeldung: 31.07.2013
(73) Patentinhaber: Rolls-Royce Deutschland Ltd & Co KG, 15827 Blankenfelde-Mahlow (DE)
(72) Erfinder: Todorovic, Predrag, 15827 Blankenfelde-Mahlow (DE); Kubisch, Thomas, 15827 Blankenfelde-Mahlow (DE)
(74) Vertreter: Hoefer & Partner Patentanwälte mbB

(56) Entgegenhaltungen:
- EP-A2- 1 336 739
- EP-A2- 1 482 478
- GB-A- 2 066 354
- US-A- 4 298 090
- US-A1- 2010 284 789

## Beschreibung

Die Erfindung bezieht sich auf ein Triebwerksgehäuse einer Fluggasturbine und im speziellen auf eine Fluggasturbine, welche eine in Strömungsrichtung vor einem Fan radial nach innen zu einem Lufteinlasskanal weisende Wabenstrukturschicht aufweist. Die Wabenstrukturschicht ist mit radial nach außen weisenden Stegen in Form einer Bienenwabe ausgebildet und weist somit eine Vielzahl von Kammern auf. Diese sind durch Ausnehmungen, beispielsweise in Form einer Mikroperforation, mit dem Lufteinströmbereich verbunden, um auf diese Weise eine Geräuschdämpfung zu erzielen. Die Waben der Wabenstrukturschicht, welche beispielsweise aus Metall oder einem Komposit-Material besteht, bilden λ/4-Dämpfer.

Bei dem aus dem Stand der Technik bekannten Konstruktionen bildet ein äußeres FanGehäuse zusammen mit der Wabenstruktur, eine konstruktive Einheit. Bauartbedingt ist es erforderlich, diese durch die Wabenstrukturschicht gebildete Geräuschdämpfungskonstruktion zweiteilig oder mehrteilig auszubilden, um die gesamte Anordnung montieren zu können. Hieraus ergibt sich, dass die Geräuschdämpfungsanordnung hinsichtlich des zur Verfügung stehenden Bauraumes begrenzt ist und somit insbesondere nicht zur Dämpfung von niedrigen Frequenzen geeignet ist. Weiterhin zeigt die EP 1 482 478 A2 ein Triebwerksgehäuse gemäß dem Oberbegriff des Anspruchs 1. Aus der US 2010/284789 A1 ist ein Triebwerksgehäuse bekannt, bei dem eine doppelte Lochanordnung mit einer radial außen angrenzenden Wabenstruktur ausgebildet ist. Die EP 1 336 739 A2 zeigt eine Ausgestaltung eines Triebwerksgehäuses mit einer doppelten zellenartigen Struktur, welche in Strömungsrichtung vor, an und nach einem Fan angeordnet ist. Weiterhin zeigt die GB 2 066 354 A eine weitere alternative Ausgestaltung einer Schalldämpfungseinrichtung eines Triebwerksgehäuses.

Der Erfindung liegt die Aufgabe zugrunde, ein Triebwerksgehäuse mit Schalldämpfungseigenschaften der eingangs genannten Art zu schaffen, welches bei einfachem Aufbau und einfacher, kostengünstiger Herstellbarkeit eine optimale Schalldämpfung, insbesondere von niedrigen Schallfrequenzen ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass radial außerhalb zumindest eines axialen Teilbereichs der Wabenstrukturschicht zusätzliche Schalldämpfungselemente angeordnet sind, welche sich in Axialrichtung erstrecken und in Umfangsrichtung ringförmig nebeneinander angeordnet sind.

Erfindungsgemäß ist somit eine zusätzliche Schalldämpfungseinheit gebildet, bei welcher die Schalldämpfungselemente, bedingt durch ihre axiale Länge, zur Dämpfung niedriger Frequenzen optimiert sind. Die Schalldämpfungselemente sind an einem Zwischenbereich zwischen einem Einlassgehäuse (Teil des Triebwerksgehäuses) und einem Fangehäuse angeordnet. Hierdurch ist es möglich, einen längeren axialen Bereich zur Schalldämpfung zu verwenden und die Schalldämpfungselemente so anzuordnen, dass sie sich in einen axialen Bereich des Fangehäuses erstrecken. Durch diese Konstruktion können die aus dem Stand der Technik bekannten Wabenstruktur-Dämpfungselemente so ausgebildet werden, dass sie nicht in Axialrichtung unterteilt sind und somit eine effektive Schalldämpfung aufweisen können. Ein weiterer Vorteil der erfindungsgemäßen Konstruktion liegt darin, dass diese ohne große konstruktive Änderungen bei bestehenden Triebwerksgehäuse-Konstruktionen eingesetzt werden kann. (Anstelle des Begriffs Triebwerksgehäuse kann auch von Triebwerksgondel gesprochen werden).

Es ist somit möglich, die bekannten Wabenstrukturschichten bis an den Übergang zu dem Fangehäuse anzuordnen und somit mit großer axialer Länge auszubilden. Das Fangehäuse kann erfindungsgemäß folglich mit einem größeren Flanschdurchmesser versehen werden, so dass Bauraum zur Verfügung steht, um die erfindungsgemäßen Schalldämpfungselemente zur Dämpfung niedrigerer Frequenzen einzubauen.

Durch die erfindungsgemäße Ausgestaltung und durch die Kombination der Wabenstrukturschicht mit den erfindungsgemäßen Schalldämpfungselementen können sowohl λ/4-Resonatoren als auch Helmholtz-Resonatoren ausgebildet werden. Da niedrigfrequente Geräusche nicht direktional übertragen werden, erweist sich die erfindungsgemäße Anordnung und Ausgestaltung der Schalldämpfungselemente als besonders effektiv.

In der Erfindung ist vorgesehen, dass jedes Schalldämpfungselement zumindest eine sich im Wesentlichen in Axialrichtung erstreckende Hohlkammer aufweist, welche über Ausnehmungen mit der Wabenstrukturschicht in Verbindung steht. Die Hohlkammer dient somit zur Dämpfung niedrigfrequenter Schwingungen und gestattet, wie oben erwähnt, ein großes Volumen. In bevorzugter Ausgestaltung der Erfindung sind die Schalldämpfungselemente in einem diese radial außen umgebenden Fangehäuse angeordnet, so wie dies vorstehend bereits erläutert wurde. Durch diese Anordnung und Ausgestaltung ergibt sich eine optimierte Gesamtkonstruktion, welche einfach und kostengünstig herstellbar ist.

Um insbesondere die Dämpfung niedrigfrequenter Schwingungen zu verbessern, ist es besonders vorteilhaft, wenn die Schalldämpfungselemente zumindest zum Teil unter Bildung einer Zwischenkammer radial von dem Fangehäuse und/oder der Wabenstrukturschicht beabstandet sind. Dabei ist es insbesondere günstig, wenn das Schalldämpfungselement mit zumindest einer Ausnehmung zur Verbindung der Zwischenkammer mit der Hohlkammer versehen ist. Hierdurch ist eine effektive Schallwelleneinleitung in das Dämpfungselement gewährleistet.

Erfindungsgemäß sind in Umfangsrichtung mehrere Schalldämpfungselemente angeordnet, um die einzelnen Zwischenkammern und Hohlkammern zu begrenzen. Dabei ist es vorteilhaft, wenn das Schalldämpfungselement zumindest eine Dichtrippe aufweist, welche sich in Axialrichtung erstreckt und radial so ausgestaltet ist, dass sie sich in Anlage mit dem Fangehäuse befindet.

Erfindungsgemäß ist somit durch die Schalldämpfungselemente eine dreidimensionale Dämpfungsstruktur geschaffen, welche aus einem metallischen Baustoff oder aus Komposit-Material gefertigt werden kann. Eine bauliche Anpassung an die konstruktiven Gegebenheiten bestehender Konstruktionen ist in einfacher Weise möglich.

Erfindungsgemäß ist vorgesehen, dass die radial außenliegende Wandung der Wabenstrukturschicht mit Ausnehmungen versehen ist, beispielsweise in Form einer Mikroperforation, um niedrigfrequente Schwingungen in die Zwischenkammer oder die Hohlkammer zu leiten. Diese Schallwellen werden in den erfindungsgemäßen Schalldämpfungselementen umgeleitet und labyrinthartig in dem Schalldämpfungselement geführt, wobei sie durch die Ausnehmung zur Verbindung der Zwischenkammer mit der Hohlkammer hindurchgeleitet werden. Die reflektierten Schallwellen beschreiben dann denselben Ausbreitungsweg. Dies führt zu einer sehr wirksamen und effektiven Schalldämpfung.

Die erfindungsgemäßen Schalldämpfungselemente können in vorteilhafter Weise weiterhin so ausgebildet sein, dass sie als kraftübertragende Strukturelemente genutzt werden können.

Insgesamt ergibt sich somit eine einfache aufgebaute Konstruktion, welche ein geringes Gewicht aufweist und den zur Verfügung stehenden Bauraum in optimaler Weise ausnutzt. Hierdurch ergibt sich eine Maximierung der möglichen Schalldämpfungswirkung, welche wiederum zu einem besseren Laufverhalten des Fans und zu einer besseren Lastverteilung führt.

Im Folgenden wird die Erfindung anhand eines Ausführungsbeispiels in Verbindung mit der Zeichnung beschrieben. Dabei zeigt:
- Fig. 1: zeigt eine schematische Darstellung eines Gasturbinentriebwerks gemäß der vorliegenden Erfindung,
- Fig. 2: eine vereinfachte schematische Axial-Teilschnittansicht,
- Fig. 3: eine vergrößerte Detailansicht gemäß Fig. 2,
- Fig. 4: eine Schnittansicht längs der Linie A-A von Fig. 2,
- Fig. 5: eine Schnittansicht längs der Linie B-B von Fig. 4, und
- Fig. 6: eine perspektivische Teil-Darstellung der erfindungsgemäßen Schalldämpfungselemente.

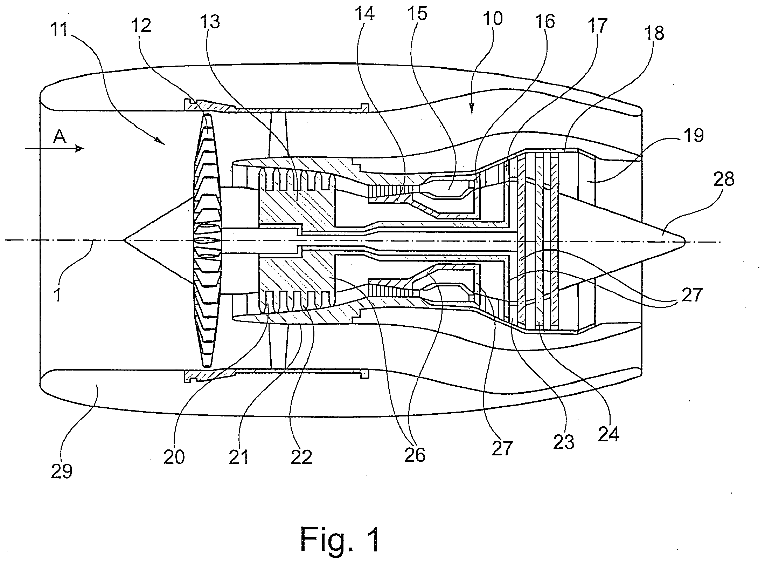

Das Gasturbinentriebwerk 10 gemäß Fig. 1 ist ein Beispiel einer Turbomaschine, bei der die Erfindung Anwendung finden kann. Aus dem Folgenden wird jedoch klar, dass die Erfindung auch bei anderen Turbomaschinen verwendet werden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Zwischendruckkompressor 13, einen Hochdruckkompressor 14, Brennkammern 15, eine Hochdruckturbine 16, eine Zwischendruckturbine 17 und eine Niederdruckturbine 18 sowie eine Abgasdüse 19, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Zwischendruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1. Das Bezugszeichen 28 zeigt einen Auslasskonus.

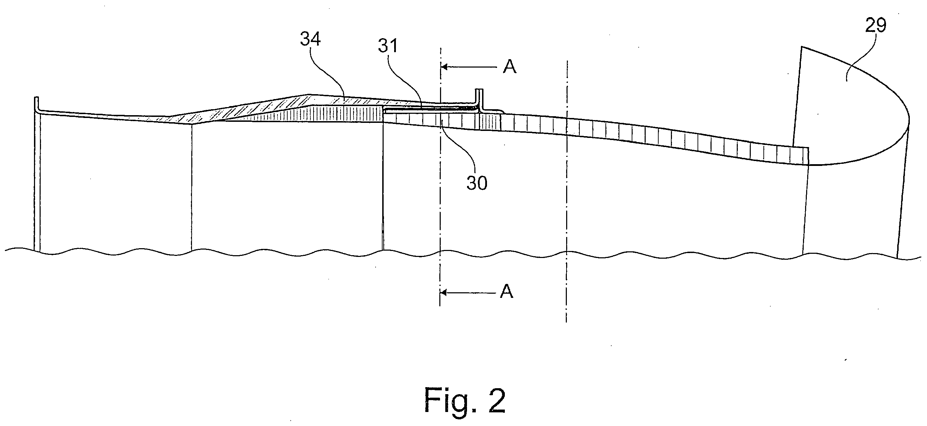

Die Fig. 2 zeigt eine schematische Teil-Darstellung eines erfindungsgemäßen Triebwerksgehäuses 29, wobei die Anströmung von rechts gemäß Fig. 2 erfolgt.

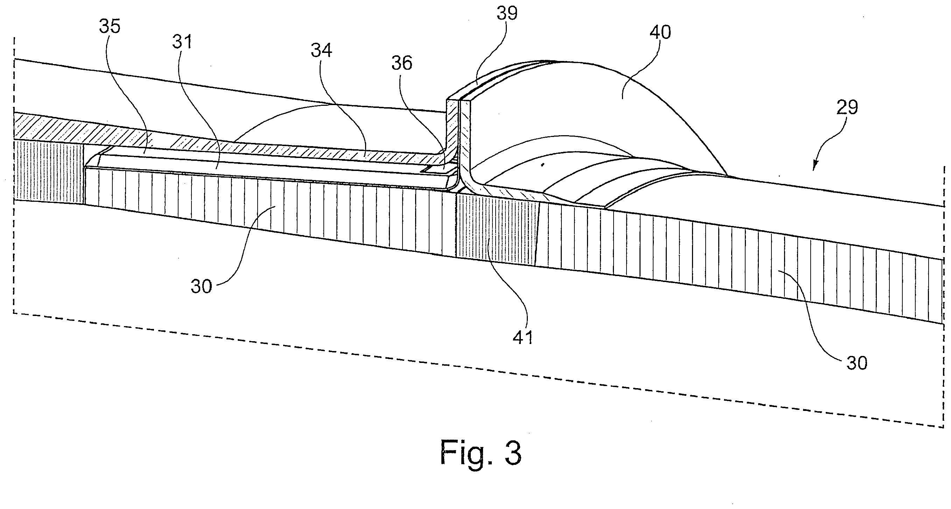

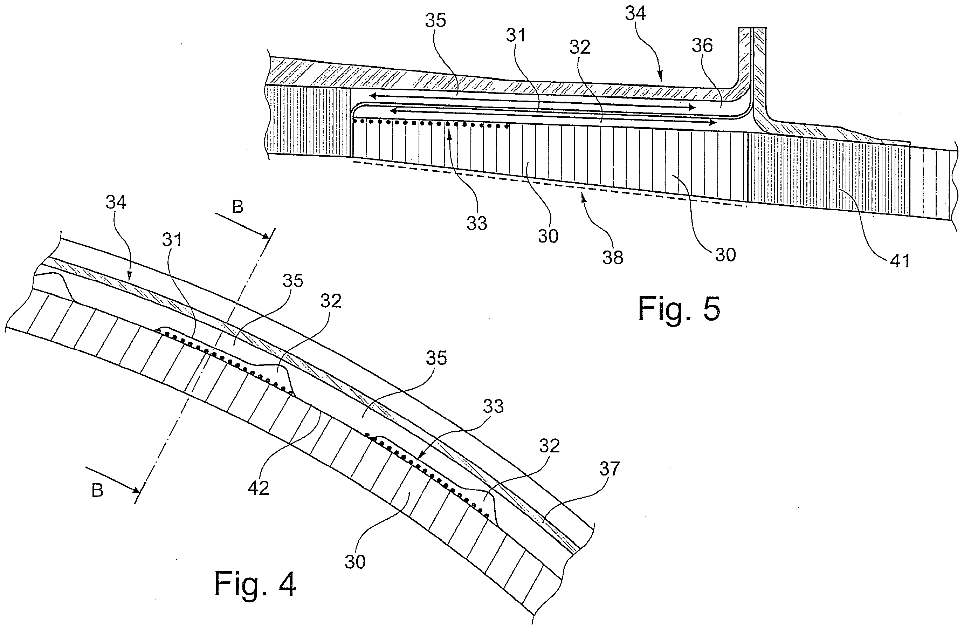

In Fig. 3 ist eine vergrößerte Detail-Darstellung gemäß Fig. 2 gezeigt. Hieraus ist ersichtlich, dass am radial innen liegenden Bereich des Triebwerksgehäuses 29 zum Lufteinlass 11 weisend eine Wabenstrukturschicht 30 ausgebildet ist. Diese weist eine Mikroperforation oder Ausnehmungen 38 auf (s. Fig. 5), durch welche Schallwellen in die Wabenstrukturschicht 30 eintreten können.

Weiterhin zeigt die Fig. 3 ein Fangehäuse 34, welches mittels eines Flansches 39 mit einem Flansch 40 des Triebwerksgehäuses 29 verbunden ist. Im Bereich des Flansches 40 ist eine Wabenstruktur 41 mit hoher Dichte bzw. Festigkeit vorgesehen.

Im Bereich des Fangehäuses 34 ist radial außerhalb der Wabenstrukturschicht 30 in Fig. 3 ein Schalldämpfungselement 31 gezeigt. Der Aufbau des Schalldämpfungselements 31 ist in den Fig. 4 bis 6 im Einzelnen erläutert.

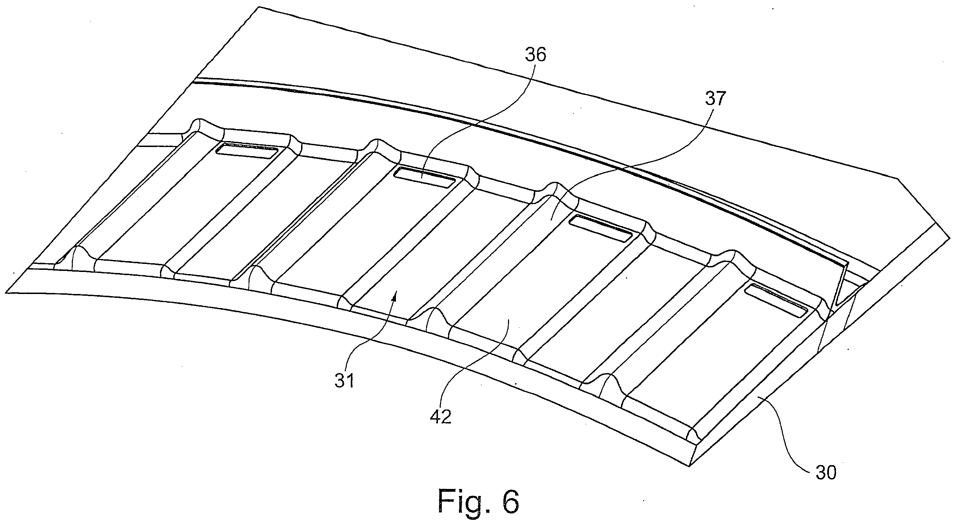

Wie die Fig. 6 zeigt, sind in Umfangsrichtung mehrere Schalldämpfungselemente 31 nebeneinander angeordnet. Diese sind in radialer Richtung mit unterschiedlichen Höhenbereichen versehen und weisen an ihrem Randbereich jeweils eine Dichtrippe 37 auf, welche gegen das Fangehäuse 34 anliegt. Wie die Fig. 5 zeigt, werden somit jeweils eine radial außenliegende Zwischenkammer 35 sowie eine radial innenliegende Hohlkammer 32 gebildet, welche durch eine Ausnehmung 36 miteinander verbunden sind. Die radial außenliegende Seite der Wabenstrukturschicht 30 weist Ausnehmungen 33 auf, beispielsweise in Form einer Mikroperforation. Somit können Schallwellen durch die Ausnehmungen/Mikroperforationen 38 in die Wabenstrukturschicht 30 eintreten und von dort aus in die Hohlkammer 32 gelangen. Von dieser verlaufen die Schallwellen durch die Ausnehmung 36 in die Zwischenkammer 35. Es ergibt sich somit die bereits erwähnte Labyrinthstruktur.

Die Fig. 6 zeigt, dass in Umfangsrichtung unterschiedliche Bereiche an dem jeweiligen Schalldämpfungselement 31 ausgebildet sind. Der mit der Ausnehmung 36 versehene Bereich ist in Fig. 5 gezeigt, er bildet die Hohlkammer 32 und die Zwischenkammer 35. Benachbart hierzu ist ein Bereich 42 vorgesehen (s. auch Fig. 4), welcher direkt gegen die Wabenstrukturschicht 30 anliegt. Somit ergibt sich eine asymmetrische Ausgestaltung der Zwischenkammer 35, welche zu einer Optimierung der Schalldämpfung führt.

### Bezugszeichenliste:

- 1: Triebwerksachse
- 10: Gasturbinentriebwerk
- 11: Lufteinlass
- 12: Fan
- 13: Zwischendruckkompressor
- 14: Hochdruckkompressor
- 15: Brennkammern
- 16: Hochdruckturbine
- 17: Zwischendruckturbine
- 18: Niederdruckturbine
- 19: Abgasdüse
- 20: Leitschaufeln
- 21: Triebwerksgehäuse
- 22: Kompressorlaufschaufeln
- 23: Leitschaufeln
- 24: Turbinenschaufeln
- 26: Kompressortrommel oder -scheibe
- 27: Turbinenrotornabe
- 28: Auslasskonus
- 29: Triebwerksgehäuse / Triebwerksgondel
- 30: Wabenstrukturschicht
- 31: Schalldämpfungselement
- 32: Hohlkammer
- 33: Ausnehmung/Mikroperforation
- 34: Fangehäuse
- 35: Zwischenkammer
- 36: Ausnehmung
- 37: Dichtrippe
- 38: Mikroperforation/Ausnehmung
- 39: Flansch
- 40: Flansch
- 41: Wabenstruktur
- 42: Bereich

## Patentansprüche

1. Triebwerksgehäuse einer Fluggasturbine mit einer radial inneren, am Triebwerksgehäuse (29) in Strömungsrichtung vor einem Fan (12) angeordneten Wabenstrukturschicht (30) im Bereich eines anströmseitigen Lufteinlasses (11), **dadurch gekennzeichnet, dass** radial außerhalb zumindest eines axialen Teilbereichs der Wabenstrukturschicht (30) Schalldämpfungselemente (31) angeordnet sind, welche sich in Axialrichtung erstrecken und in Umfangsrichtung ringförmig nebeneinander angeordnet sind,
- wobei jedes Schalldämpfungselement (31) zumindest eine radial außenliegende Zwischenkammer (35) und eine sich im Wesentlichen in Axialrichtung erstreckende, radial innenliegende Hohlkammer (32) aufweist, welche über Ausnehmungen (33) mit der Wabenstrukturschicht (30) in Verbindung steht,
- wobei das Schalldämpfungselement (31) mit zumindest einer Ausnehmung (36) zur Verbindung der Zwischenkammer (35) mit der Hohlkammer (32) versehen ist,
- wobei sich die Zwischenkammern zwischen benachbarten Hohlkammern (32) erstrecken, so dass die Schalldämpfungselemente (31) in radialer Richtung mit unterschiedlichen Höhenbereichen versehen sind.

2. Triebwerksgehäuse nach Anspruch 1, **dadurch gekennzeichnet, dass** die Schalldämpfungselemente (31) in einem diese radial außen umgebenden Fangehäuse (34) angeordnet sind.

3. Triebwerksgehäuse nach Anspruch 2, **dadurch gekennzeichnet, dass** die Schalldämpfungselemente (31) zumindest zum Teil unter Bildung der Zwischenkammer (35) radial von dem Fangehäuse (34) und/oder der Wabenstrukturschicht (30) beabstandet sind.

4. Triebwerksgehäuse nach einem der Ansprüche 1 bis 3, **dadurch gekennzeichnet, dass** das Schalldämpfungselement (31) in Umfangsrichtung zumindest eine gegen das Fangehäuse (34) in Anlage befindliche Dichtrippe (37) aufweist.

## Claims

1. Engine nacelle for an aero gas turbine having a radially inner honeycomb structure layer (30), arranged on the engine nacelle (29) upstream of a fan (12), in the region of an inflow-side air intake (11), **characterized in that** radially outside of at least one axial part region of the honeycomb structure layer (30) there are arranged noise-damping elements (31) which extend in the axial direction and in the circumferential direction are arranged next one another in annular fashion,
- wherein each noise-damping element (31) has at least one radially outer intermediate chamber (35) and one radially inner cavity (32) which extends essentially in the axial direction, and which is connected to the honeycomb structure layer (30) via cutouts (33),
- wherein the noise-damping element (31) is provided with at least one cutout (36) for connecting the intermediate chamber (35) to the cavity (32),
- wherein the intermediate chambers extend between adjacent cavities (32), so that the noise-damping elements (31) are provided with different height regions in the radial direction.

2. Engine nacelle according to Claim 1, **characterized in that** the noise-damping elements (31) are arranged in a fan casing (34) which surrounds these elements radially outwardly.

3. Engine nacelle according to Claim 2, **characterized in that** the noise-damping elements (31) are spaced apart radially from the fan casing (34) and/or from the honeycomb structure layer (30), at least in part, forming the intermediate chamber (35).

4. Engine nacelle according to one of Claims 1 to 3, **characterized in that** the noise-damping element (31) has, in the circumferential direction, at least one sealing lip (37) that bears against the fan casing (34).

## Revendications

1. Boîtier de propulseur pour une turbine à gaz d'avion, comprenant une couche structurelle en nid d'abeilles (30) radialement intérieure, disposée au niveau du boîtier de propulseur (29) dans le sens de l'écoulement avant une soufflante (12) dans la région d'une entrée d'air côté afflux (11), **caractérisé en ce que** radialement à l'extérieur d'au moins une zone axiale partielle de la couche structurelle en nid d'abeilles (30) sont disposés des éléments amortisseurs de bruit (31) qui s'étendent dans la direction axiale et qui sont disposés les uns à côté des autres sous forme annulaire dans la direction périphérique,
- chaque élément amortisseur de bruit (31) présentant au moins une chambre intermédiaire (35) située radialement à l'extérieur et une chambre creuse (32) située radialement à l'intérieur, s'étendant essentiellement dans la direction axiale, qui est en liaison avec la couche structurelle en nid d'abeilles (30) par le biais d'évidements (33),
- l'élément amortisseur de bruit (31) étant pourvu d'au moins un évidement (36) pour relier la chambre intermédiaire (35) à la chambre creuse (32),
- les chambres intermédiaires s'étendant entre des chambres creuses adjacentes (32) de telle sorte que les éléments amortisseurs de bruit (31) soient pourvus, dans la direction radiale, de régions de hauteurs différentes.

2. Boîtier de propulseur selon la revendication 1, **caractérisé en ce que** les éléments amortisseurs de bruit (31) sont disposés dans un boîtier de réception (34) les entourant radialement à l'extérieur.

3. Boîtier de propulseur selon la revendication 2, **caractérisé en ce que** les éléments amortisseurs de bruit (31) sont au moins en partie espacés radialement du boîtier de réception (34) et/ou de la couche structurelle en nid d'abeilles (30) en formant la chambre intermédiaire (35).

4. Boîtier de propulseur selon l'une quelconque des revendications 1 à 3, **caractérisé en ce que** l'élément amortisseur de bruit (31) présente dans la direction périphérique au moins une arête d'étanchéité (37) se trouvant en appui contre le boîtier de réception (34).
